# EUROPEAN PATENT APPLICATION

(11) **EP 4 417 637 A1**
(43) Date of publication of application: **21.08.2024**
(21) Application number: 22880695.6
(22) Date of filing: 12.09.2022
(51) Int. Cl.: C08G 59/24, C08G 59/50, C08J 5/24, F17C 1/06

(54) **EPOXY RESIN COMPOSITION, CURED PRODUCT THEREOF, FIBER-REINFORCED COMPOSITE MATERIAL, AND HIGH PRESSURE GAS CONTAINER**

(30) Priority: 14.10.2021 JP 2021169002
(71) Applicant: MITSUBISHI GAS CHEMICAL COMPANY, INC., Chiyoda-ku Tokyo 100-8324 (JP)
(72) Inventor: WAKAHARA, Daiki, Tokyo 125-8601 (JP); IKEUCHI, Kousuke, Hiratsuka-shi, Kanagawa 254-0016 (JP); OHNISHI, Nobuyoshi, Tokyo 125-8601 (JP); OKADA, Kana, Hiratsuka-shi, Kanagawa 254-0016 (JP); MATSUMOTO, Nobuhiko, Hiratsuka-shi, Kanagawa 254-0016 (JP)
(74) Representative: Vossius & Partner Patentanwälte Rechtsanwälte mbB
(86) International application number: PCT/JP2022/034090
(87) International publication number: WO 2023/062999

(57) **Abstract**

Provided is an epoxy resin composition containing an epoxy resin (A) and an epoxy resin curing agent (B),
wherein the epoxy resin (A) contains from 10 to 65 mass% of an epoxy resin (A1) and from 35 to 90 mass% of an epoxy resin (A2), the epoxy resin (A1) having a glycidyloxy group derived from resorcinol, and the epoxy resin (A2) being other than the epoxy resin (A1) and containing an aromatic ring;
the epoxy resin (A2) contains 70 mass% or more of an epoxy resin having a glycidyloxy group derived from bisphenol F; and
a cured product of the epoxy resin composition has a hydrogen gas permeability coefficient of 6.4 × 10⁻¹¹ or less [cc·cm/(cm²·s·cmHg)]. Also provided are a cured product of the epoxy resin composition, a fiber-reinforced composite material, and a high-pressure gas container containing the fiber-reinforced composite material.

## Description

### Technical Field

The present invention relates to an epoxy resin composition and a cured product thereof, a fiber-reinforced composite material, and a high-pressure gas container including the fiber-reinforced composite material.

### Background Art

In recent years, the use of environmentally-friendly natural gas vehicles (CNG vehicles) and fuel cell vehicles (FCV) has increased. Fuel cell vehicles are powered by fuel cells in which hydrogen is used as fuel, and thus the establishment of hydrogen stations at which vehicles are filled with hydrogen that is compressed to a high pressure is essential.

Thus far, steel tanks have been used as high-pressure gas storage tanks for hydrogen stations for fuel cell vehicles, or in other words, as vehicle-mounted fuel tanks for vehicles such as CNG vehicles and fuel cell vehicles. However, the development of lighter weight high-pressure gas storage tanks using a resin material in the liner or in the outer layer of the tank is progressing. Reducing the weight of a vehicle-mounted fuel tank has benefits such as improving the fuel economy of the vehicle in which the fuel tank is mounted.

A high-pressure gas storage tank usually has a liner made of a metal and an outer layer provided so as to cover an outer surface of the liner. In order to produce a lighter high-pressure gas storage tank, a linerless high-pressure gas storage tank has been studied (for example, Patent Document 1).

In the linerless high-pressure gas storage tank disclosed in Patent Document 1, a fiber-reinforced composite material formed by impregnating reinforcing fibers with a resin material having high ductility is used, so as to impart a strength, a gas barrier property, and a lightweight property to the gas storage tank. Also disclosed is the use of resin transfer molding (RTM) in the manufacture of linerless high-pressure gas storage tanks.

In molding by a resin transfer molding method (hereinafter also referred to as "RTM molding"), reinforcing fibers are arranged in advance in a mold including an upper mold and a lower mold, the inside of the mold is evacuated, and a resin component serving as a matrix resin of a fiber-reinforced composite material or a precursor of the resin component is filled at an ordinary pressure and thus the reinforcing fibers are impregnated with the resin component, and molding is performed.

Examples of the "precursor of a resin component serving as a matrix resin" may include a thermosetting resin composition. Desirably, the thermosetting resin composition has a low viscosity. The use of such a thermosetting resin composition can shorten the time required for filling the composition into the mold and the time required for impregnation of the composition into the reinforcing fibers, thereby improving productivity. Furthermore, the thermosetting resin composition used for the high-pressure gas storage tank is also required to produce a cured product which has a high gas barrier property.

Here, Patent Document 2 discloses, as an oxygen barrier composition for an electrical component, a composition containing a meta-substituted aromatic resin, and an additional aromatic epoxy resin, and having an oxygen permeability of a predetermined value or less.

### Citation List

### Patent Document

Patent Document 1: US 2009/0314785 A
Patent Document 2: JP 2012-533643 A

### Summary of Invention

### Technical Problem

A high-pressure gas container for hydrogen gas storage, such as those used in a hydrogen station for a fuel cell vehicle or an on-vehicle fuel tank for a CNG vehicle, and a fuel cell vehicle, is required to have a high barrier property against hydrogen gas. In particular, when the high-pressure gas container is linerless, the material used for the high-pressure gas container is required to have higher hydrogen gas barrier properties.

However, with regard to the resin used in the high-pressure gas storage tank disclosed in Patent Document 1, and the oxygen barrier composition disclosed in Patent Document 2, the hydrogen barrier property had not been considered in both cases. And thus there was room for improvement in this respect. In particular, in the techniques disclosed in Patent Documents 1 and 2, a thermosetting resin composition capable of achieving both low viscosity suitable for RTM molding and hydrogen gas barrier properties has not been found.

Desirably, in RTM molding, the thermosetting resin has a considerably high curing rate in a mold from the viewpoint of productivity. However, when the thermosetting resin composition is cured too quickly, heat is generated at the time of curing, which may cause problems such as scorching in the obtained molded article.

An object of the present invention is to provide a thermosetting resin composition having low viscosity and moldability suitable for RTM molding and capable of achieving a high hydrogen gas barrier property. Also provided are a cured product of the thermosetting resin, a fiber-reinforced composite material, and a high-pressure gas container including the fiber-reinforced composite material.

### Solution to Problem

The present inventors have found that the problems can be solved by a thermosetting epoxy resin composition containing a predetermined amount of an epoxy resin having a glycidyloxy group derived from resorcinol and a predetermined amount of an epoxy resin having a glycidyloxy group derived from bisphenol F as a main epoxy resin, and, when formed into a cured product, having a hydrogen gas permeability coefficient of a predetermined value or less.

That is, the present invention relates to the following.
[1] An epoxy resin composition containing an epoxy resin (A) and an epoxy resin curing agent (B),
   wherein the epoxy resin (A) contains from 10 to 65 mass% of an epoxy resin (A1) and from 35 to 90 mass% of an epoxy resin (A2), the epoxy resin (A1) having a glycidyloxy group derived from resorcinol, and the epoxy resin (A2) being other than the epoxy resin (A1) and containing an aromatic ring;
   the epoxy resin (A2) contains 70 mass% or more of an epoxy resin having a glycidyloxy group derived from bisphenol F; and
   a cured product of the epoxy resin composition has a hydrogen gas permeability coefficient of 6.4 × 10⁻¹¹ or less [cc·cm/(cm²·s·cmHg)].
[2] A cured product of the epoxy resin composition described in [1].
[3] A fiber-reinforced composite material containing a cured product of the epoxy resin composition described in [1] and a reinforcing fiber.
[4] A method for producing the fiber-reinforced composite material described in [3], the method including: impregnating the reinforcing fiber with the epoxy resin composition, and subsequently molding the epoxy resin composition by curing, wherein the molding is performed by a low-pressure RTM method, a medium-pressure RTM method, a high-pressure RTM method, a vacuum RTM method, a compression RTM method, or a liquid compression molding method.
[5] A high-pressure gas container containing the fiber-reinforced composite material described in [3].

### Advantageous Effects of Invention

The present invention provides an epoxy resin composition having low viscosity and moldability suitable for RTM molding and capable of achieving a high hydrogen gas barrier property. Also provided are a cured product of the epoxy resin composition, a fiber-reinforced composite material, and a high-pressure gas container including the fiber-reinforced composite material. The high-pressure gas container can be manufactured by RTM molding, and can also be a linerless high-pressure gas container. Furthermore, the high-pressure gas container has a high hydrogen gas barrier property and is suitable as a container for storing high-pressure hydrogen gas.

### Description of Embodiments

### Epoxy resin composition

The epoxy resin composition according to an embodiment of the present invention is an epoxy resin composition containing an epoxy resin (A) and an epoxy resin curing agent (B),
wherein the epoxy resin (A) contains from 10 to 65 mass% of an epoxy resin (A1) and from 35 to 90 mass% of an epoxy resin (A2), the epoxy resin (A1) having a glycidyloxy group derived from resorcinol, and the epoxy resin (A2) being other than the epoxy resin(A1) and containing an aromatic ring;
the epoxy resin (A2) contains 70 mass% or more of an epoxy resin having a glycidyloxy group derived from bisphenol F; and
a cured product of the epoxy resin composition has a hydrogen gas permeability coefficient of 6.4 × 10⁻¹¹ or less [cc·cm/(cm²·s·cmHg)].

The epoxy resin composition according to an embodiment of the present invention has the constitution described above, and it has low viscosity and moldability suitable for RTM molding and can achieve a high hydrogen gas barrier property.

As used herein, "low viscosity (suitable for RTM molding)" means that the viscosity of the epoxy resin composition at 80°C is preferably equal to or lower than the viscosity value described below.

In the present specification, "moldability (suitable for RTM molding)" means that when the epoxy resin composition is cured by heating in a mold, the curing proceeds sufficiently, and there is little discoloration and scorching in the obtained molded article, and thus a molded article having good appearance is obtained.

The viscosity and moldability of the epoxy resin composition can be specifically evaluated by the methods described in Examples.

The reason why the production method of the present invention exhibits the effect described above is not clear, but can be assumed as follows.

The present inventors have found that the epoxy resin (Al) having a glycidyloxy group derived from resorcinol (hereinafter also simply referred to as "epoxy resin (A1)" or "component (A1)") has low viscosity and rapid curability among epoxy resins, and exhibits a high hydrogen gas barrier property. However, the epoxy resin (A1) has a low epoxy equivalent and is rapid-curable, and thus readily reacts with an epoxy resin curing agent rapidly to generate heat during thermal curing. Therefore, it is found that when the content of the epoxy resin (A1) in the epoxy resin is too large, a problem such as discoloration or scorching of the cured product may occur in RTM molding. Furthermore, the epoxy resin (A1) tends to yield a cured product having a low glass-transition temperature (Tg), and thus there was room for improvement in mold releasability from a mold.

The epoxy resin (A2) that is other than the epoxy resin (A1) and contains an aromatic ring (hereinafter also simply referred to as "epoxy resin (A2)" or "component (A2)") is relatively likely to exhibit a hydrogen gas barrier property among epoxy resins, yields a cured product with a high Tg, and can also suppress heat generation during thermal curing. In particular, an epoxy resin having a glycidyloxy group derived from bisphenol F do not impair the low viscosity and hydrogen gas barrier property derived from the epoxy resin (A1). It is considered that, when the content of the epoxy resin having a glycidyloxy group derived from bisphenol F is 70 mass% or more in the epoxy resin (A2), the composition can achieve a low viscosity and moldability suitable for RTM molding, and can achieve a high hydrogen gas barrier property.

Furthermore, the hydrogen gas permeability coefficient of a cured product of the epoxy resin composition of the present invention is 6.4 × 10⁻¹¹ or less [cc·cm/(cm²·s·cmHg)]. Since the hydrogen gas permeability coefficient of the cured product is a predetermined value or less, the epoxy resin composition according to an embodiment of the present invention is suitable for use in a container for storing high-pressure hydrogen gas.

### <Epoxy resin (A)>

The epoxy resin (A) used in the epoxy resin composition according to an embodiment of the present invention contains from 10 to 65 mass% of an epoxy resin (A1) and from 35 to 90 mass% of an epoxy resin (A2). The epoxy resin (A1) has a glycidyloxy group derived from resorcinol. The epoxy resin (A2) is other than the epoxy resin (A1) and contains an aromatic ring.

The epoxy resin (A2) contains 70 mass% or more of an epoxy resin having a glycidyloxy group derived from bisphenol F. Accordingly, an epoxy resin composition capable of achieving a low viscosity and moldability suitable for RTM molding and a high hydrogen gas barrier property can be obtained.

### (Epoxy resin (A1))

The epoxy resin (A1) has a glycidyloxy group derived from resorcinol. Since the epoxy resin (A) contains the epoxy resin (A1), an epoxy resin composition which has a low viscosity, is rapidly curable, and can achieve a high hydrogen gas barrier property can be provided.

The epoxy resin (A1) is typically resorcinol diglycidyl ether, and may contain oligomers in addition to resorcinol diglycidyl ether.

As the epoxy resin (A1), commercially available products such as "Denacol EX-201" manufactured by Nagase ChemteX Corporation can be used.

The content of the epoxy resin (A1) in the epoxy resin (A) is from 10 to 65 mass%, preferably from 10 to 60 mass%, more preferably from 15 to 55 mass%, still more preferably from 20 to 55 mass%, still more preferably from 30 to 55 mass%, and still more preferably from 35 to 50 mass%. When the content of the epoxy resin (A1) in the epoxy resin (A) is 10 mass% or more, the epoxy resin composition can realize a low viscosity, rapid curability, and high hydrogen gas barrier property, and when the content is 65 mass% or less, scorching during heat molding in a mold can be suppressed.

### (Epoxy resin (A2))

The epoxy resin (A2) is other than the epoxy resin (A1) and contains an aromatic ring.

The epoxy resin (A2) contains 70 mass% or more of an epoxy resin having a glycidyloxy group derived from bisphenol F from the viewpoint that the epoxy composition can readily realize low viscosity, rapid curability, and a hydrogen gas barrier property. The content of the epoxy resin having a glycidyloxy group derived from bisphenol F in the epoxy resin (A2) is preferably 75 mass% or more, more preferably 80 mass% or more, still more preferably 85 mass% or more, yet still more preferably 90 mass% or more, yet still more preferably 95 mass% or more, and 100 mass% or less.

The epoxy resin having a glycidyloxy group derived from bisphenol F is typically bisphenol F diglycidyl ether, and may contain oligomers in addition to bisphenol F diglycidyl ether.

The epoxy resin (A2) other than the epoxy resin having a glycidyloxy group derived from bisphenol F may be an epoxy resin containing at least one aromatic ring and at least two epoxy groups. The aromatic ring may be a single ring or a condensed ring, and examples thereof include, but are not limited to, a benzene ring, a naphthalene ring, an anthracene ring, and a tetracene ring. Among them, at least one selected from the group consisting of a benzene ring and a naphthalene ring is preferable, and a benzene ring is more preferable.

Specific examples of the epoxy resin (A2) other than the epoxy resin having a glycidyloxy group derived from bisphenol F include at least one selected from the group consisting of an epoxy resin having a glycidylamino group derived from meta-xylylenediamine, an epoxy resin having a glycidylamino group derived from para-xylylenediamine, an epoxy resin having a glycidylamino group derived from diaminodiphenylmethane, an epoxy resin having a glycidylamino group and/or a glycidyloxy group derived from para-aminophenol, an epoxy resin having a glycidyloxy group derived from bisphenol A, and an epoxy resin having a glycidyloxy group derived from phenol novolak. In order to improve various performance aspects such as flexibility, impact resistance, and moist heat resistance, two or more types of the epoxy resins described above may be mixed at an appropriate ratio and used.

Of the epoxy resins described above, from the viewpoints of a low viscosity, rapid curability, and ease of exhibiting a hydrogen gas barrier property, at least one selected from the group consisting of an epoxy resin having a glycidylamino group derived from meta-xylylenediamine, an epoxy resin having a glycidylamino group derived from para-xylylenediamine, and an epoxy resin having a glycidyloxy group derived from bisphenol A, and it is more preferably to contain an epoxy resin having a glycidyloxy group derived from bisphenol A. That is, the epoxy resin (A2) may preferably further contain an epoxy resin having a glycidyloxy group derived from bisphenol A, besides the epoxy resin having a glycidyloxy group derived from bisphenol F.

The epoxy resin (A2) is more preferably an embodiment consisting of an epoxy resin having a glycidyloxy group derived from bisphenol F alone, or epoxy resin having a glycidyloxy group derived from bisphenol F and epoxy resin having a glycidyloxy group derived from bisphenol A.

The content of the epoxy resin (A2) in the epoxy resin (A) is from 35 to 90 mass%, preferably from 40 to 90 mass%, more preferably from 45 to 85 mass%, still more preferably from 45 to 80 mass%, still more preferably from 45 to 70 mass%, and still more preferably from 50 to 65 mass%. When the content of the epoxy resin (A2) in the epoxy resin (A) is 35 mass% or more, scorching during thermal molding in a mold can be suppressed. When the content is 90 mass% or less, an epoxy resin composition that does not significantly impair the low viscosity, rapid curability, and high hydrogen gas barrier property derived from the epoxy resin (A1) can be obtained.

The epoxy resin (A) can also contain an epoxy resin other than the epoxy resin (A1) and the epoxy resin (A2). Examples of the epoxy resins other than the epoxy resin (A1) and the epoxy resin (A2) include an aliphatic epoxy resin having no aromatic ring. Examples of the aliphatic epoxy resin having no aromatic ring include a chain aliphatic epoxy resin, an aliphatic epoxy resin having an alicyclic structure, etc.

Note that, from the viewpoint of exhibiting a high hydrogen gas barrier property, the total content of the epoxy resin (A1) and the epoxy resin (A2) in the epoxy resin (A) is preferably 70 mass% or more, more preferably 80 mass% or more, still more preferably 90 mass% or more, and still more preferably 95 mass% or more, and 100 mass% or less.

The epoxy equivalent of the epoxy resin (A) is preferably 400 g/eq or less, more preferably 300 g/eq or less, still more preferably 250 g/eq or less, still more preferably 220 g/eq or less, still more preferably 200 g/eq or less, still more preferably 180 g/eq or less, and still more preferably 160 g/eq or less, from the viewpoint of achieving both low viscosity and rapid curability of the epoxy resin composition. Furthermore, from the viewpoint of suppressing the occurrence of scorching at the time of heat molding in a mold, it is preferably 120 g/eq or more.

### <Epoxy resin curing agent (B)>

Examples of the epoxy resin curing agent (B) used in the epoxy resin composition according to an embodiment of the present invention include compounds having two or more groups having an active hydrogen that is reactive with the epoxy group in the epoxy resin (A). Examples of the epoxy resin curing agent include an amine-based curing agent, a phenol-based curing agent, an acid anhydride-based curing agent, and a hydrazide-based curing agent. Among them, the epoxy resin curing agent (B) is preferably an amine-based curing agent from the viewpoints of low viscosity and rapid curability and from the viewpoint of exhibiting a high hydrogen gas barrier property.

Examples of the amine-based curing agent include a polyamine compound having two or more amino groups in a molecule or a modified product thereof. Examples of the polyamine compounds include chain-like aliphatic polyamine compounds, such as ethylenediamine, diethylenetriamine, triethylenetetramine, tetraethylenepentamine, pentaethylenehexamine, hexamethylenediamine, 2-methylpentamethylenediamine, and trimethylhexamethylenediamine; aromatic ring-containing aliphatic polyamine compounds, such as ortho-xylylenediamine, meta-xylylenediamine (MXDA) and para-xylylenediamine (PXDA); polyamine compounds having an alicyclic structure, such as isophoronediamine (IPDA), menthenediamine, norbomanediamine, tricyclodecanediamine, adamantanediamine, diaminocyclohexane, 1,2-bis(aminomethyl)cyclohexane, 1,3-bis(aminomethyl)cyclohexane, 1,4-bis(aminomethyl)cyclohexane, 1,4-diamino-2-methylcyclohexane, 1,4-diamino-3,6-diethylcyclohexane, diaminodiethylmethyl cyclohexane, 3,3'-dimethyl-4,4'-diaminodicylcohexylmethane(bis(4-amino-3-methylcyclohexyl)methane), 3,3',5,5'-tetramethyl-4,4'-diaminodicyclohexylmethane, and 4,4'-diaminodicyclohexylmethane; aromatic polyamine compounds such as phenylenediamine, diaminodiphenylmethane, diaminodiphenylsulphone, diethyltoluenediamine, and 2,2'-diethyl-4,4'-methylenedianiline; polyamine compounds having a heterocyclic structure, such as N-aminoethylpiperazine, and N,N'-bis(aminoethyl)piperazine; and polyether polyamine compounds. In addition, examples of modified products of the polyamine compound include a Mannich modified product, an epoxy modified product, a Michael adduct, a Michael adduct/polycondensate, a styrene-modified product, and a polyamide-modified product of the compound described above. One of these can be used alone, or two or more can be combined and used.

Among the above, from the viewpoint of exhibiting a high hydrogen gas barrier property and improving the Tg of the cured product, the epoxy resin curing agent (B) is preferably at least one type selected from the group consisting of an aromatic ring-containing aliphatic polyamine compound, a polyamine compound having an alicyclic structure, an aromatic polyamine compound, and a polyamine compound having a heterocyclic structure. Furthermore, from the viewpoint of low viscosity, it is more preferably at least one type selected from the group consisting of meta-xylylenediamine, para-xylylenediamine, isophoronediamine, 1,3-bis(aminomethyl)cyclohexane, 1,4-bis(aminomethyl)cyclohexane and N-aminoethylpiperazine, and from the viewpoint of low viscosity and rapid curability, it is still more preferably at least one selected from the group consisting of meta-xylylenediamine, para-xylylenediamine, 1,3-bis(aminomethyl)cyclohexane and 1,4-bis(aminomethyl)cyclohexane, and from the viewpoint of exhibiting high hydrogen gas barrier properties and from the viewpoint of low viscosity and rapid curability, it is still more preferably an embodiment containing meta-xylylenediamine.

From the viewpoint of a low viscosity and rapid curability, and from the viewpoint of exhibiting a high hydrogen gas barrier property, the content of meta-xylylenediamine in the epoxy resin curing agent (B) is preferably 70 mass% or more, more preferably 80 mass% or more, still more preferably 90 mass% or more, and still more preferably 95 mass% or more, and 100 mass% or less.

The content ratio of the epoxy resin (A) and the epoxy resin curing agent (B) in the epoxy resin composition according to an embodiment of the present invention is an amount such that the ratio of the number of active hydrogens in the epoxy resin curing agent to the number of epoxy groups in the epoxy resin (the number of active hydrogens in the epoxy resin curing agent/the number of epoxy groups in the epoxy resin) is preferably from 1/0.5 to 1/2, more preferably from 1/0.75 to 1/1.5, and still more preferably from 1/0.8 to 1/1.2. It is sufficient that the ratio is within the range described above in the final product, and may be constant during molding of the epoxy resin composition or may be varied during molding.

The content of the epoxy resin (A) in the epoxy resin composition according to an embodiment of the present invention is not limited as long as the content ratio of the epoxy resin (A) and the epoxy resin curing agent (B) is preferably within the range described above, but is preferably 70 mass% or more, more preferably more than 70 mass%, still more preferably 75 mass% or more, and still more preferably 80 mass% or more, and preferably 90 mass% or less, more preferably 85 mass% or less, and still more preferably 82 mass% or less from the viewpoint of exhibiting low viscosity, rapid curability, and a high hydrogen gas barrier property.

The content of the epoxy resin curing agent (B) in the epoxy resin composition according to an embodiment of the present invention is not limited as long as the content ratio between the epoxy resin (A) and the epoxy resin curing agent (B) is preferably in the range described above, but is preferably 10 mass% or more, more preferably 15 mass% or more, even more preferably 18 mass% or more, and preferably 30 mass% or less, more preferably less than 30 mass%, even more preferably 28 mass% or less, even more preferably 25 mass% or less, from the viewpoint of exhibiting low viscosity, rapid curability, and high hydrogen gas barrier properties.

The total content of the epoxy resin (A) and the epoxy resin curing agent (B) in the epoxy resin composition is preferably 70 mass% or greater, more preferably 80 mass% or greater, even more preferably 90 mass% or greater, and yet even more preferably 95 mass% or greater, and 100 mass% or less, from the viewpoint of effective expression of the effect of the present invention.

The epoxy resin composition according to an embodiment of the present invention may further contain additional components such as a filler, a modifying component such as a plasticizer, a flow adjusting component such as a thixotropic agent, a curing accelerator, a reactive or non-reactive diluent, a pigment, a leveling agent, a tackifier, and a stress relaxation component depending on the application.

Among the above, examples of the curing accelerator include a phenolic compound such as bisphenol A and a styrenated phenol, and a salt thereof; a sulfonic acid-based compound such as p-toluenesulfonic acid and methanesulfonic acid, and a salt or esterified product thereof; a carboxylic acid-based compound such as salicylic acid and benzoic acid, and a salt thereof; a mercaptane-terminated polysulfide compound; a guanidine-based compound; and an alkanolamine-based compound. One of these can be used alone, or two or more can be combined and used.

From the viewpoint of effectively exhibiting the effects of the present invention, in a case where the epoxy resin composition contains a curing accelerator, the content thereof is preferably from 0.01 to 15 mass%, more preferably from 0.1 to 10 mass% in the epoxy resin composition according to an embodiment of the present invention.

Furthermore, examples of the stress relaxation component include elastomer particles such as silicone-based, butyl acrylate-based, polyether amine-based, and other rubber particles.

In addition, from the viewpoint of being subjected to RTM molding, the epoxy resin composition according to an embodiment of the present invention is preferably a solventless type. That is, the epoxy resin composition according to an embodiment of the present invention is substantially solvent-free and has low viscosity. From this viewpoint, the content of the solvent in the epoxy resin composition is preferably 10 mass% or less, more preferably 5 mass% or less, still more preferably 1 mass% or less, and the lower limit is 0 mass%.

Examples of the "solvent" include water and an organic solvent.

### <Hydrogen Gas Permeability Coefficient>

The cured product of the epoxy resin composition according to an embodiment of the present invention exhibits a high hydrogen gas barrier property. The hydrogen gas permeability coefficient of the cured product of the epoxy resin composition according to an embodiment of the present invention can be 6.4 × 10⁻¹¹[cc·cm/(cm²·s·cmHg)], preferably 6.2 × 10⁻¹¹ or less [cc·cm/(cm²·s·cmHg)], more preferably 6.0 × 10⁻¹¹ or less [cc·cm/(cm²·s·cmHg)], more preferably 5.5 × 10⁻¹¹ or less [cc·cm/(cm²·s·cmHg)], even more preferably 5.0 × 10⁻¹¹ or less [cc·cm/(cm²·s·cmHg)], even more preferably 4.5 × 10⁻¹¹ or less [cc·cm/(cm²·s·cmHg)], even more preferably 4.0 × 10⁻¹¹ or less [cc·cm/(cm²·s·cmHg)], even more preferably 3.5 × 10⁻¹¹ or less [cc·cm/(cm²·s·cmHg)].

The hydrogen gas permeability coefficient of the cured product of the epoxy resin composition can be measured by the method described in the examples using a cured product having a thickness of 1 mm under dry conditions at 23°C.

### <Viscosity>

The epoxy resin composition according to an embodiment of the present invention has a low viscosity suitable for RTM molding. The viscosity at a temperature of 80°C of the epoxy resin composition is preferably 100 mPa·s or less, more preferably 60 mPa·s or less, even more preferably 55 mPa·s or less, even more preferably 50 mPa·s or less, even more preferably 45 mPa·s or less, and even more preferably 40 mPa·s or less. When the viscosity at a temperature of 80°C of the epoxy resin composition is 100 mPa·s or less, the productivity in RTM molding is improved. The lower limit of the viscosity of the epoxy resin composition at a temperature of 80°C is not particularly limited, but is preferably 5 mPa·s or more from the viewpoint of suppressing disturbance of the reinforcing fibers caused by turbulence in the mold due to an increase in the Reynold's number.

Incidentally, the epoxy resin composition according to an embodiment of the present invention preferably has an initial viscosity in the range described above after 30 seconds at a temperature of 80°C after mixing the epoxy resin curing agent and the epoxy resin. The viscosity of the epoxy resin composition can be measured by the method specifically described in Examples using an E-type viscometer.

The method for preparing the epoxy resin composition according to an embodiment of the present invention is not particularly limited, and the epoxy resin composition can be prepared by mixing the epoxy resin (A), the epoxy resin curing agent (B), and if necessary, an additional component using known method and apparatus. The order of mixing of the components contained in the epoxy resin composition is also not particularly limited. The epoxy resin composition may be prepared by mixing the component (A1) and the component (A2) constituting the epoxy resin (A) and then mixing the mixture with the epoxy resin curing agent (B). Alternatively, the epoxy resin composition may be prepared by simultaneously mixing the component (A1) and the component (A2) constituting the epoxy resin (A), and an additional component, with the epoxy resin curing agent (B).

From the viewpoint of avoiding the progress of gelation before use, the respective components contained in the epoxy resin composition are preferably brought into contact with and mixed immediately before use. The temperature at which the components contained in the epoxy resin composition are mixed can be appropriately adjusted depending on the viscosity of the epoxy resin, and is preferably 120°C or lower, more preferably 100°C or lower from the viewpoint of suppressing an increase in viscosity, and is preferably 20°C or higher, more preferably 25°C or higher from the viewpoint of miscibility of the epoxy resin. Furthermore, the mixing time is preferably in the range of from 0.1 to 15 minutes, more preferably from 0.2 to 10 minutes, and still more preferably from 0.3 to 5 minutes. As the apparatus, for example, apparatuses exemplified in various molding methods described later can be used.

### Cured product

The cured product of the epoxy resin composition according to an embodiment of the present invention (hereinafter, also simply referred to as "cured product of the present invention") is obtained by curing the epoxy resin composition according to an embodiment of the present invention by a known method. The curing conditions of the epoxy resin composition are appropriately selected depending on the application and form, and are not particularly limited.

The form of the cured product according to an embodiment of the present invention is also not particularly limited and can be selected according to the application. For example, in a case where the application of the epoxy resin composition is a coating material, the cured product of the composition is usually in the form of a film. From the viewpoint of effectively exhibiting the effects of the present invention, the cured product according to an embodiment of the present invention is preferably a matrix resin of a fiber-reinforced composite material described below.

In the epoxy resin composition according to an embodiment of the present invention, the glass transition temperature (Tg) of the cured product is preferably high from the viewpoint of improving the productivity of a molded article when used in a fiber-reinforced composite material, and from the viewpoint of heat resistance of the molded article. When the cured product of the epoxy resin composition has a high Tg, the molding cycle can be shortened because the mold can be released without cooling the mold to a low temperature when the epoxy resin composition is used for a fiber-reinforced composite material. In addition, the heat resistance of the molded article is improved.

For example, when the epoxy resin composition according to an embodiment of the present invention is subjected to curing at a temperature of from 120°C for 15 minutes to produce a cured product, the cured product preferably has a Tg of 80°C or higher, more preferably 83°C or higher, and still more preferably 85°C or higher. The Tg is determined by subjecting a cured product to differential scanning calorimetry using a differential scanning calorimeter from 30 to 250°C at a temperature raising rate of 5°C/min. The Tg of the cured product can be specifically measured by the method described in Examples.

### [Fiber-reinforced composite material]

The fiber-reinforced composite material (FRP) according to an embodiment of the present invention includes a cured product of the epoxy resin composition and reinforcing fibers, and can be obtained by impregnating reinforcing fibers with the epoxy resin composition and then curing the composition. The fiber-reinforced composite material according to an embodiment of the present invention contains a cured product of the epoxy resin composition and thus has a high hydrogen barrier property.

Examples of the form of the reinforcing fibers include short fibers, long fibers, and continuous fibers. Among these, from the viewpoint of using the obtained prepreg as a material constituting the high-pressure gas container described below, long fibers or continuous fibers are preferable, and continuous fibers are more preferable.

Note that in the present specification, short fibers have a fiber length of from 0.1 mm to less than 10 mm, and long fibers have a fiber length of from 10 mm to 100 mm. In addition, continuous fibers also refer to a fiber bundle having a fiber length of greater than 100 mm.

Examples of the shape of the continuous fiber include various forms including: a unidirectional (UD) material in which monofilaments or multifilaments are arranged in one direction or in alternately crosswise manner; a fabric such as a knitted fabric; a nonwoven fabric; and a mat. Among these, from the viewpoint of producing a fiber-reinforced composite material and a high-pressure gas container by RTM molding, monofilament, fabric, nonwoven fabric, or mat is preferable, and fabric is more preferable.

The average fiber length of the continuous fiber bundle is not particularly limited, but from the viewpoint of molding processability, the average fiber length is preferably from 1 to 10000 m, and more preferably from 100 to 10000 m.

From the viewpoint of molding processability and the viewpoint of easily obtaining a high strength and a high elastic modulus, the average fineness of the continuous fiber bundle is preferably from 50 to 2000 tex (g/1000 m), more preferably from 200 to 1500 tex, and even more preferably from 500 to 1500 tex.

Also, the average tensile modulus of the continuous fiber bundle is preferably from 50 to 1000 GPa.

Examples of materials of the reinforcing fibers include inorganic fibers, such as carbon fibers, glass fibers, basalt fibers, metal fibers, boron fibers, and ceramic fibers; and organic fibers such as aramid fibers, polyoxymethylene fibers, aromatic polyamide fibers, polyparaphenylene benzobisoxazole fibers, and ultra-high molecular weight polyethylene fibers. Among them, inorganic fibers are preferable from the viewpoint of obtaining high strength, at least one selected from the group consisting of carbon fibers, glass fibers, and basalt fibers is preferable from the viewpoint of light weight, high strength, and high elastic modulus, and carbon fibers are more preferable from the viewpoint of strength and lightweight properties. That is, the fiber-reinforced composite material according to an embodiment of the present invention is more preferably a carbon fiber-reinforced composite material (CFRP) containing a cured product of the epoxy resin composition and carbon fibers.

Examples of carbon fibers include polyacrylonitrile-based carbon fibers and pitch-based carbon fibers. In addition, a carbon fiber made from a plant-derived raw material, such as lignin or cellulose, can also be used.

The reinforcing fibers may be treated with a treatment agent. Examples of the treatment agent include a surface treatment agent or a sizing agent.

A silane coupling agent is preferable as the surface treatment agent. Examples include a silane coupling agent having a vinyl group, a silane coupling agent having an amino group, a silane coupling agent having an epoxy group, a silane coupling agent having a (meth)acrylic group, and a silane coupling agent having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and of these, a single sizing agent can be used, or two or more can be used in combination. Examples of combinations of two or more sizing agents include urethane/epoxy-based sizing agents, urethane/acrylic-based sizing agents, and urethane/carboxylic acid-based sizing agents.

From the viewpoints of improving the interfacial adhesiveness to the cured product of the epoxy resin composition and further improving the strength, impact resistance of the obtained prepreg and composite material, the amount of the treatment agent is preferably from 0.001 to 5 mass%, more preferably from 0.1 to 3 mass%, and even more preferably from 0.5 to 2 mass%, relative to the amount of the reinforcing fibers.

Commercially available products can be also used as the reinforcing fibers. Examples of commercially available continuous carbon fibers include, for example, TORAYCA CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, etc.; respective series of TORAYCA YARNS "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", "Z600", etc. which are manufactured by TORAY INDUSTRIES, INC.; TENAX "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are manufactured by TEIJIN LIMITED; TENAX "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45"" series, "UMS55" series, and "HTS40MC" series, which are manufactured by TEIJIN LIMITED; carbon fiber fabrics such as PYROFIL "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M" which are manufactured by Mitsubishi Chemical Corporation; and carbon fiber tows such as PYROFIL "HT", "IM", "HM" series, GRAFIL "HT" series, and "DIALEAD" series.

From the viewpoint of obtaining a high strength and a high elastic modulus, the content of the reinforcing fibers in the fiber-reinforced composite material is in a range that makes the volume fraction of the reinforcing fibers in the fiber-reinforced composite material preferably 0.10 or more, more preferably 0.20 or more, still more preferably 0.30 or more, and still more preferably 0.40 or more. In addition, from the viewpoints of hydrogen gas barrier properties, impact resistance, and molding processability, the content of the reinforcing fibers is preferably in a range of 0.85 or less, more preferably 0.80 or less, and even more preferably 0.70 or less.

A volume fraction Vf of the reinforcing fibers in the fiber-reinforced composite material can be calculated from the following equation. Vf = {(mass (g) of reinforcing fibers)/(specific gravity of reinforcing fibers)} / [{mass (g) of reinforcing fibers)/(specific gravity of reinforcing fibers)} + {(mass (g) of cured product of epoxy resin composition)/(specific gravity of cured product of epoxy resin composition)}]

### [Method for producing fiber-reinforced composite material]

The method for producing a fiber-reinforced composite material according to an embodiment of the present invention is not particularly limited as long as the method includes impregnating a reinforcing fiber with the epoxy resin composition and then curing the epoxy resin composition to mold the fiber-reinforced composite material.

Since the epoxy resin composition according to an embodiment of the present invention is rapidly curable, it is preferable to perform impregnation into the reinforcing fiber and curing within a shorter time. From this viewpoint, the method for producing the fiber-reinforced composite material according to an embodiment of the present invention preferably includes impregnating the reinforcing fiber with the epoxy resin composition, and then molding the epoxy resin composition by curing the epoxy resin composition. The molding is preferably performed by a low-pressure RTM method, a medium-pressure RTM method, a high-pressure RTM method, a vacuum RTM method, a compression RTM method, or a liquid compression molding method.

In the molding method, an epoxy resin as a main agent and an epoxy resin curing agent can be mixed and used immediately before molding. In addition, the obtained epoxy resin composition has a low viscosity and is rapidly-curing. Therefore, filling of the composition into a mold and impregnation of the composition into reinforcing fibers are fast and curing of the composition is rapid, and the molding time can be greatly reduced. Therefore, the epoxy resin composition according to an embodiment of the present invention is particularly suitable for the molding method described above. In addition, productivity of medium to large sized FRP production can be greatly enhanced by using the molding method described above.

From the viewpoint of producing a high-pressure gas container to be described later, the molding is more preferably performed by any one of a low-pressure RTM method, a medium-pressure RTM method, a high-pressure RTM method, and a vacuum RTM method.

In the present specification, the term "low-pressure" in the low-pressure RTM method means that the pressure at the time of pressure-feeding and mixing the epoxy resin as the main component of the epoxy resin composition and the epoxy resin curing agent is less than 0.5 MPa. Similarly, "medium-pressure" in the medium-pressure RTM method means that the pressure is 0.5 MPa or more and less than 7 MPa, and "high-pressure" in the high-pressure RTM method means that the pressure is 7 MPa or more and 20 MPa or less.

In the low-pressure RTM method, it is preferable to use a dynamic mixer as an apparatus for mixing an epoxy resin as a main agent of the epoxy resin composition and an epoxy resin curing agent. The dynamic mixer includes a cylindrical high-speed rotating body having protrusions and depressions on its surface. For example, the epoxy resin and the epoxy resin curing agent are filled in separate tanks, and are fed to a dynamic mixer, and the two liquids of the main agent and the curing agent are mixed by the rotating body. The epoxy resin composition thus prepared is injected into a mold to impregnate reinforcing fibers, and then the epoxy resin is cured. The low-pressure RTM method is advantageous in the case where the mixing ratio of the epoxy resin and the epoxy resin curing agent are greatly different from each other and from the viewpoint of the cost of the apparatus and the space saving of the apparatus.

In the medium-pressure RTM method, it is preferable to use a static mixer as an apparatus for mixing the epoxy resin, which is the main component of the epoxy resin composition, and the epoxy resin curing agent. A static mixer is a tubular reactor incorporating one or more static mixers consisting of a number of mixing elements. For example, an epoxy resin and an epoxy resin curing agent are filled in separate tanks, and each is fed to a static mixer. By passing the two liquids of the epoxy resin and the epoxy resin curing agent through the twisted element of the static mixer, the two liquids are mixed by the action of division, conversion, inversion, etc. The epoxy resin composition thus prepared is injected into a mold to impregnate reinforcing fibers, and then the epoxy resin is cured. The medium-pressure RTM method is advantageous in that the epoxy resin composition can be pumped into the mold under pressure and in terms of equipment costs.

In the high-pressure RTM method, it is preferable to use an impingement mixer as a device for mixing the epoxy resin, which is the main component of the epoxy resin composition, and the epoxy resin curing agent. For example, reinforcing fibers are placed in a pair of upper and lower molds and the molds are sealed, and the pressure in the molds is reduced. Next, the epoxy resin, which is a main component of the epoxy resin composition, and the epoxy resin curing agent are filled in separate tanks, and each of them is discharged from a very small hole (orifice) at a high speed and subjected to collision mixing in a mixing chamber of a collision mixer. The epoxy resin composition thus prepared is injected under a high-pressure into a mold to impregnate the reinforcing fibers with the composition, and then the epoxy resin is cured.

In the vacuum RTM method, for example, reinforcing fibers are disposed in advance in a mold including an upper mold and a lower mold using a film or a metal, and the inside of the mold is evacuated. The epoxy resin composition is injected into the mold at normal pressure to impregnate reinforcing fibers with the epoxy resin composition, and then the epoxy resin is cured.

The epoxy resin curing agent and the epoxy resin composition according to an embodiment of the present invention can also be preferably used in a compression RTM method, or a liquid compression molding (LCM) method. In these molding methods, the epoxy resin composition is cast on reinforcing fibers, and then heated and compressed to impregnate the reinforcing fibers with the epoxy resin while curing the epoxy resin.

In the molding of the FRP, the temperature at which the epoxy resin composition is injected into the mold or impregnated into the reinforcing fibers is preferably from 20 to 120°C, more preferably from 25 to 100°C. When the epoxy resin curing agent and the epoxy resin are supplied from separate tanks and mixed immediately before molding, the temperatures at the time of mixing the epoxy resin curing agent and the epoxy resin may be set separately for each of the epoxy resin and the epoxy resin curing agent. The temperature during mixing of the epoxy resin curing agent is preferably from 5 to 30°C, more preferably from 10 to 25°C, from the viewpoint of suppressing an increase in viscosity. The temperature at the time of mixing the epoxy resin can be appropriately adjusted depending on the viscosity of the epoxy resin, and is preferably from 20 to 120°C, more preferably from 25 to 100°C. The temperature may be constant during the molding, or may be varied during the molding.

The time for impregnating the reinforcing fibers with the epoxy resin composition is preferably from 0.1 to 15 minutes, more preferably from 0.2 to 10 minutes, and still more preferably from 0.3 to 5 minutes from the viewpoint of moldability and productivity.

The discharge rate at the time of injecting the epoxy resin composition into the mold is preferably from 5 to 400 g/s, more preferably from 10 to 100 g/s, and still more preferably from 20 to 60 g/s, from the viewpoint of moldability and producibility. The discharge rate may be constant during molding or may be varied during molding.

The temperature for curing the epoxy resin composition is preferably from 50 to 200°C, more preferably from 80 to 150°C, and still more preferably from 100 to 150°C. The curing temperature may be constant during the molding or may be varied during the molding. When the curing temperature is 50°C or higher, the curing of the epoxy resin proceeds sufficiently, and the obtained FRP has excellent mechanical properties. Alternatively, when the temperature is 200°C or lower, the cost for adjusting the mold temperature can be reduced. The time for curing the epoxy resin composition can be appropriately selected according to the curing temperature, and the like, and is preferably from 0.1 to 15 minutes, more preferably from 0.2 to 10 minutes, and still more preferably from 0.5 to 5 minutes from the viewpoint of moldability and productivity.

### [High-Pressure Gas Container]

The high-pressure gas container according to an embodiment of the present invention includes the fiber-reinforced composite material. It is sufficient that at least a part of the high-pressure gas container according to an embodiment of the present invention is composed of the fiber-reinforced composite material. For example, in the case of a high-pressure gas container having a liner and an outer layer provided so as to cover the outer surface of the liner, at least one of the liner or the outer layer may be composed of the fiber-reinforced composite material. In the case of a linerless high-pressure gas container, a linerless high-pressure gas container entirely composed of the fiber-reinforced composite material may be exemplified.

Specific embodiments of the high-pressure gas container including the fiber-reinforced composite material include (1) a configuration including a liner made of a metal and an outer layer made of the fiber-reinforced composite material according to an embodiment of the present invention, (2) a configuration including a liner made of a resin and an outer layer made of the fiber-reinforced composite material according to an embodiment of the present invention, (3) a configuration including a liner made of the fiber-reinforced composite material according to an embodiment of the present invention and an outer layer made of a material other than the fiber-reinforced composite material, (4) a configuration including only a container made of the fiber-reinforced composite material according to an embodiment of the present invention (linerless), etc.

Examples of the metal used in the "liner made of a metal" of (1) include light alloys such as an aluminum alloy or a magnesium alloy.

The resin used in the "liner made of a resin" in (2) is not particularly limited as long as it is a resin that excels in pressure resistance and gas barrier properties such as a hydrogen gas barrier property, and examples of the resin include a thermoplastic resin, a cured product of a thermosetting resin, and a cured product of a photocurable resin. Among these, a thermoplastic resin is preferable from the viewpoint of ease of molding the liner.

Examples of the thermoplastic resin include a polyamide resin, a polyester resin, a polyolefin resin, a polyimide resin, a polycarbonate resin, a polyether imide resin, a polyamide imide resin, a polyphenylene ether imide resin, a polyphenylene sulfide resin, a polysulfone resin, a polyester sulfone resin, a polyacrylate resin, a liquid crystal polymer, a polyether ether ketone resin, a polyether ketone resin, a polyether ketone ketone resin, a polyether ether ketone ketone resin, and a polybenzimidazole resin, and of these, a single type may be used, or two or more types may be combined and used.

From the viewpoint of hydrogen gas barrier properties and pressure resistance, the thermoplastic resin is preferably at least one selected from the group consisting of a polyamide resin and a polyolefin resin, and more preferably a polyamide resin.

In addition, from the viewpoint of increasing impact resistance, the resin liner can also contain the stress relaxation component mentioned above.

The "outer layer made of a material other than the fiber-reinforced composite material" in (3) is preferably an outer layer made of a fiber-reinforced composite material other than the fiber-reinforced composite material according to an embodiment of the present invention from the viewpoint of improving the reinforcing property.

In the embodiments of (1) to (3), the outer layer can be formed so as to cover the outer surface of the liner main body without a gap.

The outer layer may be provided directly on the outer surface of the liner. Alternatively, one or more additional layer(s) may be provided on the outer surface of the liner, and the outer layer 2 may be provided on the surface of the additional layer(s). For example, to improve the tight adhesiveness between the liner and the outer layer, an adhesive layer may be provided between the liner and the outer layer.

In a case where the high-pressure gas container is in the embodiment of (1) or (2), the thickness of the outer layer made of the fiber-reinforced composite material according to an embodiment of the present invention can be appropriately selected according to the capacity, shape, and other properties of the high-pressure gas container. The thickness of the outer layer is preferably 100 µm or more, more preferably 200 µm or more, still more preferably 400 µm or more from the viewpoint of imparting a high hydrogen gas barrier property and impact resistance, and is preferably 80 mm or less, more preferably 60 mm or less from the viewpoint of reducing the size and weight of the high-pressure gas container.

In a case where the high-pressure gas container is the embodiment of (3), the thickness of the liner made of the fiber-reinforced composite material according to an embodiment of the present invention can be appropriately selected according to the capacity, shape, and other properties of the high-pressure gas container. The thickness of the liner is preferably 100 µm or more, more preferably 200 µm or more, still more preferably 400 µm or more from the viewpoint of a hydrogen gas barrier property and pressure resistance, and is preferably 60 mm or less, more preferably 40 mm or less from the viewpoint of miniaturization and weight reduction of the high-pressure gas container.

In a case where the high-pressure gas container is the embodiment of (4), the thickness of the container made of the fiber-reinforced composite material according to an embodiment of the present invention can be appropriately selected according to the capacity, shape, and other properties of the high-pressure gas container. The thickness of the container is preferably 1 mm or more, more preferably 2 mm or more, still more preferably 5 mm or more from the viewpoint of a hydrogen gas barrier property and pressure resistance, and is preferably 80 mm or less, more preferably 60 mm or less from the viewpoint of miniaturization and weight reduction of the high-pressure gas container.

From the viewpoint of obtaining high strength and high elastic modulus, the content of the reinforcing fibers in the liner, the outer layer, or the high-pressure gas container made of the fiber-reinforced composite material according to an embodiment of the present invention is in a range that makes the volume fraction of the reinforcing fibers preferably 0.10 or more, more preferably 0.20 or more, still more preferably 0.30 or more, and still more preferably 0.40 or more. In addition, from the viewpoints of hydrogen gas barrier property, impact resistance, and molding processability, the content of the reinforcing fibers is preferably in a range that makes the volume fraction of the reinforcing fibers 0.85 or less, more preferably 0.80 or less, even more preferably 0.75 or less, and yet even more preferably 0.70 or less.

The volume fraction of the reinforcing fiber can be calculated by the same method as described above.

Among the above, from the viewpoint of a lightweight property, and the viewpoint that a high hydrogen barrier property is required for the fiber-reinforced composite material, the high-pressure gas container is preferably of any one of the embodiments (2), (3) and (4), more preferably the embodiment (3) or (4). And from the viewpoint of being subjected to the RTM molding and the like described above, the high-pressure gas container is preferably of the embodiment (4).

Note that the high-pressure gas container may further have a component made of a material other than the fiber-reinforced composite material, such as a pipe sleeve and a valve. Furthermore, any optional layer such as a protective layer, a coating layer, and an antirust-containing layer may be formed on the surface of the high-pressure gas container.

The gas to be stored in the high-pressure gas container may be any material that is in gas phase at 25°C and 1 atm, and examples thereof include hydrogen, oxygen, carbon dioxide, nitrogen, argon, LPG, alternative chlorofluorohydrocarbons, and methane. Among these, the gas is preferably hydrogen from the viewpoint of efficacy of the present invention.

As a method for producing the high-pressure gas container according to an embodiment of the present invention, the production method described in the method described above for producing a fiber-reinforced composite material can be used. Above all, from the viewpoint of using the epoxy resin composition according to an embodiment of the present invention, the high-pressure gas container of the present invention is preferably produced by RTM molding. Specifically, the method for producing a high-pressure gas container includes impregnating reinforcing fibers with the epoxy resin composition and subsequently curing and molding the epoxy resin composition, and the molding is preferably performed by any one of a low-pressure RTM method, a medium-pressure RTM method, and a high-pressure RTM method. According to this method, a liner, an outer layer, or a linerless high-pressure gas container of a high-pressure gas container can be collectively molded using a mold.

### Examples

The present invention will be described in further detail hereinafter using Examples and Comparative Examples, but the present invention is not limited to the following Examples. The measurements and evaluations in the present Examples were performed by the following methods.

### Hydrogen gas permeability coefficient [cc·cm/(cm²·s·cmHg)]

The epoxy resin composition prepared in each example was poured into a mold (120 mm × 120 mm × 1 mm) coated with a release agent ("FREKOTE 770 NC" available from Henkel Corporation), and heated and cured at 120°C for 1 hour to produce a plate-shaped test piece (thickness: 1 mm). The hydrogen gas permeability coefficient [cc·cm/(cm²·s·cmHg)] of the test piece was measured in a dry state at 23°C by a differential pressure method using a gas permeability measuring device ("GTR-30X" available from GTR Tech Co., Ltd.).

### <Viscosity>

The viscosity at 80°C of the epoxy resin composition prepared in each Example was measured using an E-type viscosimeter "TVE-22H type viscosimeter cone plate type" (available from Toki Sangyo Co., Ltd.). The measurement was started after mixing the epoxy resin and the epoxy resin curing agent, and the value at 80°C after 30 seconds was read.

### <Moldability in Mold>

A molded article (fiber-reinforced composite material) was prepared by vacuum RTM (VaRTM) by the following method using the epoxy resin composition prepared in each example, and using continuous carbon fibers "TORAYCA CLOTH UT70 30G" (unidirectional cloth, 300 g/m², sheet thickness: 0.167 mm) available from Toray Industries, Inc. as continuous reinforcing fibers, and moldability in a mold was evaluated.

In a mold for vacuum RTM (160 mm × 160 mm × 2 mmt) coated with a release agent ("FREKOTE 770 NC" available from Henkel), 6 continuous carbon fibers in total were laminated so that the filament directions were arranged in alternately crosswise manner (0°/90°/0°/90°/0°/90°). Next, the epoxy resin composition of each example was injected into a mold, and then cured by heating at 120°C for 1 hour to prepare a molded body having a volume fraction Vf of reinforcing fibers of 0.50. The appearance of the obtained molded body was visually observed and evaluated according to the following criteria.

### (Evaluation Criteria)

A: There was no scorching or discoloration in the molded body, and the appearance was good.
B: Discoloration was observed in the molded body, but scorching was substantially suppressed.
C: Scorching was observed in the molded body, the color of the molded body turned into brown and the appearance of the molded body was impaired.

### <Glass Transition Temperature (Tg) of Cured Product>

The Tg of the cured product of the epoxy resin composition prepared in each example was determined by subjecting the epoxy resin composition cured by heating at 120°C for 15 minutes to differential scanning calorimetry using a differential scanning calorimeter "DSC 25" (available from TA Instruments) from 30 to 250°C under a condition of a temperature rising rate of 5°C/min.

### Example 1 (Preparation and Evaluation of Epoxy Resin Composition)

As the epoxy resin (A), component (A1): resorcinol diglycidyl ether ("Denacol EX-201" available from Nagase ChemteX Corporation, epoxy equivalent: 117 g/eq) and component (A2): bisphenol F diglycidyl ether ("jER 807" available from Mitsubishi Chemical Corporation, epoxy equivalent: 168 g/eq) were used, and as the epoxy resin curing agent (B), meta-xylylenediamine (MXDA available from MITSUBISHI GAS CHEMICAL COMPANY, INC.) was used. These epoxy resin (A) and epoxy resin curing agent (B) were blended and mixed in the parts by mass shown in Table 1 to produce an epoxy resin composition. The ratio of the number of active hydrogens in the epoxy resin curing agent to the number of epoxy groups in the epoxy resin (the number of active hydrogens in the epoxy resin curing agent/the number of epoxy groups in the epoxy resin) was 1/1.

The produced epoxy resin composition was evaluated by the method described above. The results are indicated in Table 1.

### Examples 2 to 8 and Comparative Examples 1 to 4

An epoxy resin composition was prepared and evaluated by the same method as in Example 1 except that the types and blending amounts of the epoxy resin (A) and the epoxy resin curing agent (B) were changed as shown in Table 1. The results are indicated in Table 1.

The blending amounts (parts by mass) in Table 1 are all active ingredient amounts.

### [Table 1]

**Table 1**

| (parts by mass) | | | | Examples | | | | | | | | Comparative Examples | | | |
|---|---|---|---|---|---|---|---|---|---|---|---|---|---|---|---|
| | | | | 1 | 2 | 3 | 4 | 5 | 6 | 7 | 8 | 1 | 2 | 3 | 4 |
| Epoxy Resin Composition | Epoxy resin (A) | (A1) | Resorcinol diglycidyl ether | 10 | 20 | 40 | 50 | 60 | 10 | 50 | 50 | 80 | 10 | | |
| | | (A2) | Bisphenol F diglycidyl ether | 90 | 80 | 60 | 50 | 40 | 63 | 50 | 50 | 20 | 45 | 100 | |
| | | | Bisphenol A diglycidyl ether | | | | | | 27 | | | | 45 | | 100 |
| | Epoxy resin curing agent (B) | MXDA | | 21 | 22 | 24 | 25 | 26 | 20 | | | 28 | 20 | 20 | |
| | | IPDA | | | | | | | | 25 | | | | | 18 |
| | | 1,3-BAC | | | | | | | | | 25 | | | | |
| | Content (mass%) of bisphenol F diglycidyl ether in (A2) | | | 100 | 100 | 100 | 100 | 100 | 70 | 100 | 100 | 100 | 50 | 100 | 0 |
| | Content (mass%) of component (A) in epoxy resin composition | | | 82.6 | 82.0 | 80.6 | 80.0 | 79.4 | 83.3 | 80.0 | 80.0 | 78.1 | 83.3 | 83.3 | 84.7 |
| | Content (mass%) of component (B) in epoxy resin composition | | | 17.4 | 18.0 | 19.4 | 20.0 | 20.6 | 16.7 | 20.0 | 20.0 | 21.9 | 16.7 | 16.7 | 15.3 |
| | Number of active amine hydrogens in curing agent/Number of epoxy groups in epoxy resin | | | 1/1 | 1/1 | 1/1 | 1/1 | 1/1 | 1/1 | 1/1 | 1/1 | 1/1 | 1/1 | 1/1 | 1/1 |
| Evaluation Results | Hydrogen gas permeability coefficient (× 10⁻¹¹[cc·cm/(cm²·s·cmHg)]) of cured product | | | 4.7 | 4.2 | 3.0 | 2.7 | 2.4 | 4.7 | 6.2 | 4.6 | 1.7 | 6.5 | 5.2 | 20.6 |
| | Viscosity (mPa·s @80°C) | | | 54.5 | 47.4 | 36.9 | 31.5 | 27.8 | 42.5 | 55.8 | 32.6 | 22.4 | 62.0 | 66.9 | 70.5 |
| | Moldability in mold (when heated at 120°C) | | | A | A | A | A | B | A | A | B | C | A | A | A |
| | Tg (°C) of cured product | | | 93.1 | 91.5 | 87.0 | 84.6 | 81.0 | 94.2 | 92.1 | 89.3 | 78.8 | 97.0 | 94.2 | 145.0 |

The components described in Table 1 are as follows.

### <Epoxy resin (A)>

### (A1) Resorcinol diglycidyl ether ("Denacol EX-201" available from Nagase ChemteX Corporation, epoxy equivalent: 117 g/eq)

(A2) Bisphenol F diglycidyl ether ("jER807" available from Mitsubishi Chemical Corporation, epoxy equivalent: 168 g/eq)
(A2) Bisphenol A diglycidyl ether ("jER828" available from Mitsubishi Chemical Corporation, epoxy equivalent: 186 g/eq)

### <Epoxy resin curing agent (B)>

MXDA: meta-Xylylenediamine (available from MITSUBISHI GAS CHEMICAL COMPANY, INC.)
IPDA: Isophoronediamine (available from Tokyo Chemical Industry Co., Ltd.)
1,3-BAC: 1,3-bis(aminomethyl)cyclohexane (available from Mitsubishi Gas Chemical Company, Inc.)

As shown in Table 1, all of the epoxy resin compositions according to an embodiment of the present invention had a viscosity of 60 mPa·s or less at 80°C, generated little scorching even when molded by heating to 120°C in a mold, and had a low viscosity and moldability suitable for RTM molding. Furthermore, the obtained cured products had a high hydrogen gas barrier property. In particular, Examples 1 to 6 in which meta-xylylenediamine was used as the epoxy resin curing agent (B) were excellent in a balance between a high hydrogen gas barrier property, a low viscosity, and moldability in a mold.

On the other hand, scorching was observed when the epoxy resin composition was heated and molded in a mold at 120°C in Comparative Example 1, in which an epoxy resin having a high ratio of the ingredient (A1) was used. The cured products of the epoxy resin compositions of Comparative Examples 2 and 4, which had both low contents of the component (A1) and bisphenol F diglycidyl ether in the epoxy resin, did not have a sufficient hydrogen gas barrier property. Furthermore, the epoxy resin compositions of Comparative Examples 2 to 4 were inferior to the epoxy resin composition according to an embodiment of the present invention in terms of a low viscosity.

### Industrial Applicability

The present invention provides an epoxy resin composition having low viscosity and moldability suitable for RTM molding and capable of achieving a high hydrogen gas barrier property. Also provided are a cured product of the epoxy resin composition, a fiber-reinforced composite material, and a high-pressure gas container including the fiber-reinforced composite material. The high-pressure gas container can be manufactured by RTM molding, and can also be a linerless high-pressure gas container. Furthermore, the high-pressure gas container has a high hydrogen gas barrier property and is suitable as a container for storing high-pressure hydrogen gas.

## Claims

1. An epoxy resin composition comprising an epoxy resin (A) and an epoxy resin curing agent (B),
wherein the epoxy resin (A) comprises from 10 to 65 mass% of an epoxy resin (A1) and from 35 to 90 mass% of an epoxy resin (A2), the epoxy resin (A1) having a glycidyloxy group derived from resorcinol, the epoxy resin (A2) being other than the epoxy resin (A1) and comprising an aromatic ring;
the epoxy resin (A2) comprises 70 mass% or more of an epoxy resin having a glycidyloxy group derived from bisphenol F; and
a cured product of the epoxy resin composition has a hydrogen gas permeability coefficient of 6.4 × 10⁻¹¹ or less [cc·cm/(cm²·s·cmHg)].

2. The epoxy resin composition according to claim 1, wherein the epoxy resin (A2) further comprises an epoxy resin having a glycidyloxy group derived from bisphenol A.

3. The epoxy resin composition according to claim 1 or 2, wherein the epoxy resin curing agent (B) comprises meta-xylylenediamine.

4. The epoxy resin composition according to any one of claims 1 to 3, wherein the epoxy resin composition has a viscosity of 60 mPa·s or less at a temperature of 80°C.

5. A cured product of the epoxy resin composition described in any one of claims 1 to 4.

6. A fiber-reinforced composite material comprising a cured product of the epoxy resin composition described in any one of claims 1 to 4, and a reinforcing fiber.

7. The fiber-reinforced composite material according to claim 6, wherein the reinforcing fiber is at least one selected from the group consisting of a carbon fiber, a glass fiber, and a basalt fiber.

8. A method for producing the fiber-reinforced composite material described in claim 6 or 7, the method comprising:
impregnating the reinforcing fiber with the epoxy resin composition, and subsequently molding the epoxy resin composition by curing, wherein the molding is performed by a low-pressure RTM method, a medium-pressure RTM method, a high-pressure RTM method, a vacuum RTM method, a compression RTM method, or a liquid compression molding method.

9. A high-pressure gas container comprising the fiber-reinforced composite material described in claim 6 or 7.
